# EUROPEAN PATENT APPLICATION

(11) **EP 1 676 477 A1**
(43) Date of publication of application: **05.07.2006**
(21) Application number: 04785980.6
(22) Date of filing: 26.07.2004
(51) Int. Cl.: A01K 61/00

(54) **FISH FARM USING SHALLOW WATER CURRENTS**

(30) Priority: 01.08.2003 ES 200301839
(71) Applicant: Viking Aquaculture Development, S.L., 28013 Madrid (ES)
(72) Inventor: OIESTAD, Victor, E-36620 Vilanova de Arousa - Pontevedra (ES)
(74) Representative: Urizar Anasagasti, Jesus Maria
(86) International application number: PCT/ES2004/070060
(87) International publication number: WO 2005/011369

(57) **Abstract**

A shallow water fish farm that uses brief water obstacles, consistent basically, in a series of tray-you suspend (1) in excess placed on cross-sectional frames (2) that hold it. The possibility exists of settling at several levels, up to ten, by where a water flows between 1 and 20 centimeters of depth.

## Description

### OBJECT OF THE INVENTION

The present invention refers to a system for farming both fish and other marine species that uses shallow waters in rectangular tanks of a convenient length and width, permitting them to be vertically stacked like shelves. It belongs to the fish-farming category, and more specifically, to fish farms that culture marine species.

### BACKGROUND OF THE INVENTION

Although knowledge of the culture of marine fish species has existed for many years, the systems have evolved very little. Basically, these systems consist in tanks of different sizes placed at floor level, with a water depth of between fifty and two hundred centimetres with a lightweight roof structure. The proportion of water is large in relation to the quantity of fish. The fish move in calm waters or in rotating waters due to the circulation produced by the inflowing water, which acts as a self-cleaning system and only functions when replacement water is introduced through pipes. Equipment to enrich the water with oxygen is connected to the system. The water is not re-used and is discharged into a drain once it has been used in any one of the tanks. A great quantity of water has to be discharged in order to renew the water for each kilogram of biomass. The tank has to be emptied for it to be cleaned. Wide corridors have to be left for feed distribution by means of wheelbarrows. The ratio between biomass density per constructed square metre is low. For this reason, large land areas next to the sea need to be occupied in order to achieve large production farms of commercial relevance.

Thus, the possibility of building fish farms that occupy much less space, which can be installed taking advantage of existing buildings and are commercially viable is a desirable option. Economically viable farms that are not exclusive to large investors or institutions and which can be installed in relatively small buildings.

Several documents exist that refer to the same field of action as the present patent, among which are found:

PCT application WO 971787836A (McFARLANE) dated 22-05-1997 refers generically to the culture of marine animals without setting down concrete specifications. As can be observed from the layout drawing in the document itself, the trays are inclined, which, in principle, would preclude the possibility of culturing fish species as they would fall. It would only be possible to culture molluscs as they have their own self-fixing system and, even so, a screen to prevent them from falling would have to be installed. The fact that the term "tray" is found cannot be deemed to exclude all that makes use of the grammatical term and of the marine environment. An important technical fact to be taken into consideration is the fact that in all the references found, it is applied to molluscs rather than fish for various reasons, a fundamental one of which is the little importance given to the technical quality of the water as they do not allow for its oxygenation, introducing it turbulently, nor for its massive re-use within the system. All the water flows along the entire course, which implies an unviable quality for the fish found at the end of the course. Besides, they do not allow for the large rates of flow that the culture of fish in industrial production would require. Other aspects concerning the handling of the fish are not solved in the systems that have been found: what is done to the fish; how they are manipulated; and how they are graded, etc. Moreover, neither the number of stacked trays nor their dimensions is specified in the references found.

US 5377624 A (CRAIG et al.) application dated 7^{th} of May 1993 incurs in similar imprecisions as the first, and its immediate application refers to mollusc culture although later it might be generalised. It suffers from the same inconvenience as before, that is to say, the use of all the water with no renewal. This is totally impossible for fish culture as has been commented above. Besides, it speaks of a self-supporting system, which, in the case of deterioration, only allows for its complete dismantling.

EP934697A (NAVITAL S.R.L. et al.) application dated 9^{th} December 1998 again refers to mollusc and other marine animal species but not to fish species and suffers from the already commented inconveniences.

EP285457A (BROOKE), application dated 5^{th} April 1988, refers to a cleaning plant for marine animals and once again the mollusc figures as the main work element. It re-uses all the water without treating it; it is self-stackable, for which reason the whole system has to be disassembled in order to change the organisms. In the present patent application, each tray is managed autonomously, and the water that each one receives has been treated fully, thus obtaining water quality in all levels.

**GB 2349786 (UNIVERSITY OF PORTSMOUTH),** application dated 12^{th} May 1999, once again refers to a system for the culture of ragworms and molluscs, using the same water in all the plant without conditioning it, which would make it unviable for fish culture.

The first claim of almost all the referred applications refers to their utility for molluscs, whose water quality requirements are low. The water is re-used without any treatment in all levels, thus its biological quality is gradually diminished. Some are self-supporting which means they have to be dismantled at the end of the production cycle or for repair. None specifies sufficiently either dimensions or characteristics to permit them to be considered industrial production systems.

### DESCRIPTION OF THE INVENTION

In order to palliate or eventually eliminate all the above-mentioned problems, herein is presented the shallow water fish farm, the object of the present patent.

The shallow water fish farm enjoys some clear advantages over the existing culture systems in one-level tanks situated at floor-level. For example, these advantages consist in its need for less floor-space as it is developed vertically and, for the same biomass production, it occupies less constructed floor area, thus needing a lower static volume of water. Moreover, and for this same reason, the environmental impact on the coast is far less than with existing systems. It can be adapted to existing infrastructures, such as industrial buildings near to the coast, from where seawater is taken for its functioning. It can also be installed in fishing regions that are in the process of industrial re-conversion, thus taking advantage of both human and material resources.

Furthermore, it is a scalable and modular system that can be installed in several heights, up to ten levels, and with various tray widths and lengths. The system is scalable in such a way that fish farms in the form of industrial parks can be built. The water can be used several times within the system, recirculating it with a good biological filtering system and even re-using it

The system can be used with a variety of species: flat fish such as turbot, pelagic fish such as seabass, bottom dwelling fish such as red mullet, gilt-head sea bream, turbot, wolfish, etc. besides crustaceans. The improvement consists in the selection of productive, healthy, hygienic, and easy to handle species of alimentary value. Today's sensibility and the problems affecting the different fishing methods convert the artificial production of fish species into a challenge for those communities with a fishing tradition and vocation. The re-conversion of communities with significant populations because of the worldwide restructuring of fish production and exploitation of the seas means that related alternatives acquire special importance and it is within this framework that the proposed production system acquires its full social dimension. Moreover, the system occupies far less land area than the traditional system, which makes its implantation much easier since there is a large production threshold, making the commercial exploitation of a fish farm worthwhile.

Biomass production follows the same productive procedure as the traditional system, that is, the fish consume the same quantity of food to grow and the same oxygen during their development process. The improvement consists in the fact that the required space is much less and, besides, resources can be managed better thanks to the possibility of automation and control, which means lower investment in buildings. It is an alternative for the development and growth of coastal regions.

It is simple to build and employs mechanisms and equipment of general industrial use, thus it is not necessary to develop each and every one of the system components, just conjugate them in an efficient way.

### DESCRIPTION OF THE DRAWINGS

In order to complement the present description and with the object of contributing to a better understanding of the invention, the present descriptive review is accompanied by a series of drawings, which form an integral part of the same and are to be considered for illustration purposes but are not limiting, in which the following is represented:

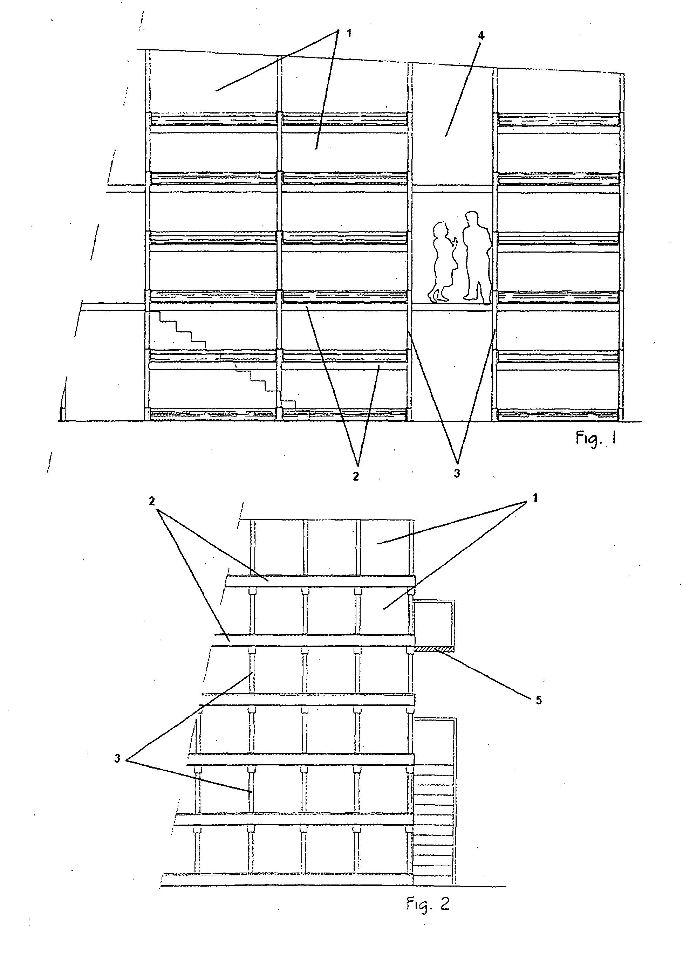

- Figure 1: The shallow water fish farm in a six-level cross-section representation.
- Figure 2: The shallow water fish farm in a six-level longitudinal section representation.

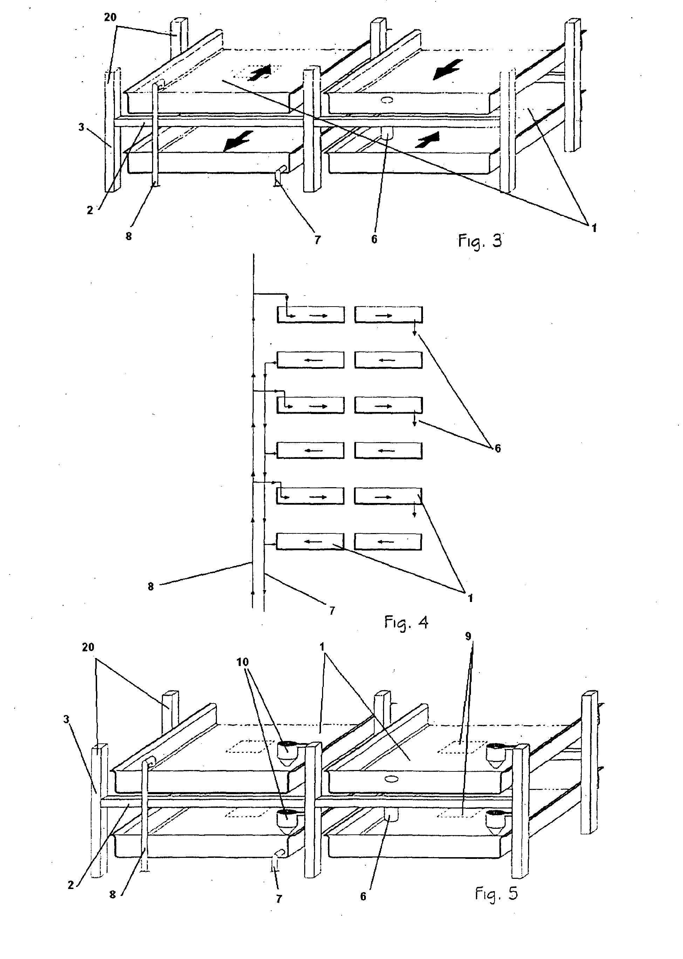

- Figure 3: View of a group of trays, with the construction layout and water movement in typical two-level recirculation.
- Figure 4: Diagram of water operation in a six-level, two trays per level representation of the invention.

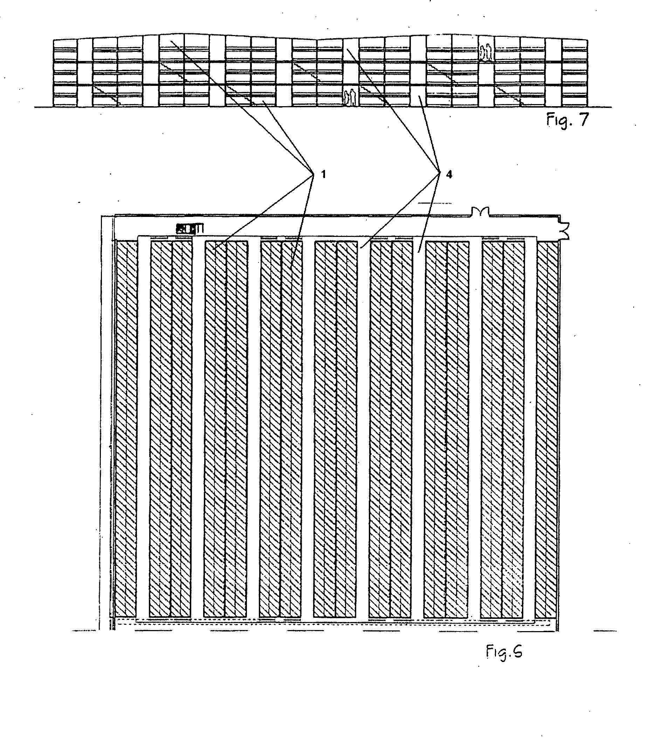

- Figure 5: Construction diagram with the feeding system and the trap doors allowing the fish to descend between levels.
- Figure 6: Plan view of the shallow water fish farm, the object of the present patent, in a 16 block, six-level representation.
- Figure 7: Section view of the shallow water fish farm, the object of the present patent, in a 16 block, six-level representation.

### PREFERRED EMBODIMENT OF THE INVENTION

As it is possible to observe from the accompanying figures, the shallow water fish farm, the object of the present patent, basically consists in a series of continuous trays (1), manufactured from food-quality polyester fibreglass (stainless steel could also be used but it is both too expensive and heavy), between one to four metres wide and five to fifty metres long, according to the possibilities, and twenty-five centimetres high, placed on transversal frames for support, with the possibility of being installed in various levels, up to ten (in the illustrative model, six levels), along which a water current of between one to twenty centimetres deep flows. The frames (2) are fixed to vertical feet, which rest on a concrete floor.

The frame (2) is made of anti-oxidant metal, such as galvanised steel or steel covered with sea water resistant paint or enamel. The trays (1) are situated in pairs or individually to facilitate access. The vertical separation between the trays (1) is from sixty to one hundred centimetres, thus creating a vertical corridor (4) every two levels. At both extremes, a projecting corridor is erected to facilitate inspection and maintenance work.

At one of the head-ends, the water supply piping system (8) is located as are the communicating water outlets between trays (6), which permit various combinations of re-use of the water from the trays (1), on one level or to one immediately below. The water always flows along one tray (1) in one direction and can return along the twin tray (1) in the opposite direction thanks to the outlet (7), or can be redirected to the level below by means of the communicating outlet between trays (6). The water velocity varies between one and ten centimetres per second.

The smallest fish, from one gram, are cultured in the higher levels, descending between levels as they grow, being in the lowest level where the commercial-sized fish are found, up to ten kilograms.

In each tray (1) different-sized fish can be separated by means of screens that allow the water, which can never stop flowing, to circulate.

The water current distributes the feed, dispensed at the head of the tray (1) in the form of floating pellets, carrying it along the tray (1) in the direction of the current. Likewise, the water current acts as a self-cleaning mechanism for particles in the water. The oxygen level can be measured and controlled along the entire course, the complementary addition either of oxygen or of air being possible. The system allows for very easy anti-parasite treatment, cleaning and inspection.

The water volume in the system is about 25% of the volume used in the conventional deep tank system.

The support structure (20) consists of vertical supporting columns (3) as well as horizontal beams (2), forming longitudinal recesses where the continuous trays (1) are accommodated. Existing commercial elements will be employed for the different types of possible support structures.

The fish farm makes use of seawater, which is transported by means of pumps to a water storage tank from where it is distributed by pipes (8) to the different levels. Oxygen is added to super-saturation level, 10-154 mg/l, at the entrance of the pipe (8) in order to guarantee the metabolic activity of the fish.
As they grow, the fish are transported from the higher levels to the lower levels by means of trap doors (9) located in the floor of the trays (1), where ramps are installed to allow the fish to descend.

For the feeding of the fish, in each tray (1) and level; small feed hoppers (10) are placed at the head (although the feed can be given along the whole length of the tray by means of computer controlled robots), where the water is introduced so that the food, in the form of floating pellets, is carried along in the direction of the current. The hoppers can be filled by a pneumatic transport system from a centralised silo installation.

As there is a complex piping system (8) in function for the water supply, the water outlets, water recirculation and drainage, a pneumatic or electrical control of valve opening and closure, directed by a central computer, is indispensable.

Likewise, there is a security and alarm mechanism because, being a hyperintensive culture system, emergency situations are critical, for which reason water or electricity supply failure have to be addressed without delay, which will be done by means of an electric generator in the case of electricity supply failure and a security service reservoir of refrigerated water in the case of water supply failure. This device halts the drainage of water to the outside, recirculating the water of the whole system to a specific service reservoir where refrigerated water is added which, by lowering the water temperature in the trays (1), reduces the fish metabolism, thus assuring time for reaction in the face of an emergency situation.

The equipment is complemented with a tank of liquid oxygen, which, by means of the appropriate mechanism, is vaporised and distributed through pipes to each of the trays. Oxygen can also be added to the water that is incorporated to the flow.

The installation can also be carried out in an industrial building where the structures (2 and 3') and the trays (1) are installed; the auxiliary service installations, such as the electric generator, oxygen tank, electricity switchboards, control panels, signalling shelf, personnel services and facilities; feed store, sanitary products store, cleaning products room and maintenance room are located in an adjoining building.

The nature of the present invention having been sufficiently described, likewise the means to implement it, there only remains to be said that the said invention can undergo certain variations in form and materials in the understanding that such changes will not substantially vary the characteristics of the following claims.

## Claims

1. A shallow water fish farm **characterised in that** it consists basically of a series of continuous trays (1) with a width between one and four metres (0,1-4 m) and a length of between five and fifty metres (1-100 m) and a height of twenty-five centimetres (5-40 cm), mounted on transversal frames (2) which support it. It is possible to install the trays in various levels, up to ten (1-20), along which water, of a depth of between one and twenty centimetres (1-30 cm), flows. The frames (2) are anchored to vertical feet (3), which rest on a concrete floor. The frame (2) is of a material resistant to oxidation (corrosion) caused by seawater. The trays (1) are in pairs or individual. The vertical separation between the trays (1) is from sixty to one hundred centimetres (10-100 cm), thus a vertical corridor (4) is formed each two levels. At the head and at the end, a small projecting corridor (5) is erected for the purpose of inspection and maintenance work.

2. A shallow water fish farm, according to claim 1, **characterised in that** at one of the head-ends the water supply piping system is situated (8) as is the piping system for the communicating outlets between trays (6), which permit various combinations for the re-use of the water in the trays (1) on one level to one immediately below. The water always flows along one tray (1) in one direction and can return along the twin tray (1) on the same level in the opposite direction, thanks to an outlet (7), or can be redirected to the lower level by the communicating outlet (6) between trays. The water flows at a variable speed of between one and ten centimetres per second (1-20 cm).

3. A shallow water fish farm, according to claim 1, **characterised in that** the smaller fish are cultured in the higher levels, descending levels as they grow, being in the lowest level where commercial sized fish are produced. The fish weigh from one gram to ten kilograms (0,01 g-50 kg). In each tray (1) different-sized fish can be separated by means of screens that permit the water, which can never stop flowing, to circulate. The water current distributes the food, dispensed at the tray head (1) in the form of floating pellets; the food being carried along in the direction of the water current in the tray (1). Likewise, the water current acts as a self-cleaning mechanism for particles in the water. The oxygen level can be measured and controlled along the entire course; the complementary addition either of oxygen or of air being possible.

4. A shallow water fish farm, according to claim 1, **characterized in that** the support structure (20) consists of vertical supporting columns (3) as well as horizontal beams or frameworks (2), forming longitudinal recesses where the continuous trays (1) are accommodated.

5. A shallow water fish farm, according to claim 1, **characterised in that** the supply of water is brought by means of pumps to a deposit from where it is distributed by means of pipes (8) to the different levels. At the head of the pipe (8), oxygen is introduced to super saturation level, depending on the temperature (10-25 mg/l), in order to guarantee the metabolic activity of the fish or other aquatic animals. As they grow, the fish are transported from the higher levels to the lower levels by means of trap doors (9) located in the floor of the trays (1), where ramps are installed to allow the fish to descend For the feeding of the fish, in each tray (1) and level, small feed hoppers (10) are placed at the head, where the water is introduced, so that the food, in the form of floating pellets, is carried along in the direction of the water current. The hoppers (10) can be filled by a pneumatic transport system from a centralised silo installation.

6. A shallow water fish farm, according to claim 1, **characterised in that** there is a complex piping system (8) in function for the water supply, the water outlets, water recirculation and drainage, controlled pneumatically or electrically and managed by a central computer.

7. A shallow water fish fann, according to claim 1, **characterised in that** there is a security and alarm mechanism, consisting of an electric generator in the case of electricity supply failure and a security service reservoir of refrigerated water in the case of water supply failure. This device halts the drainage of water to the outside, recirculating the water of the whole system to a specific service reservoir where refrigerated water is added which, by lowering the water temperature in the trays (1), reduces the fish metabolism, thus assuring time for reaction in the face of an emergency situation.

8. A shallow water fish farm, according to claim 1, **characterised in that** it incorporates a tank of liquid oxygen which, by means of the appropriate mechanism, is vaporised and distributed through pipes to each of the trays. Oxygen can also be added to the water that is incorporated to the flow. The installation can also be carried out in an industrial building where the structures (2 and 3) and the trays (1) are installed; the auxiliary service installations, such as the electric generator, oxygen tank, electricity switchboards, control and signal panels, personnel services and facilities, feed store, sanitary products store, cleaning products room and maintenance room are located in an adjoining building.
